# EUROPEAN PATENT APPLICATION

(11) **EP 2 445 217 A1**
(43) Date of publication of application: **25.04.2012**
(21) Application number: 10789157.4
(22) Date of filing: 25.05.2010
(51) Int. Cl.: H04N 7/32

(54) **IMAGE ENCODING DEVICE, IMAGE DECODING DEVICE, IMAGE ENCODING METHOD, AND IMAGE DECODING METHOD**

(30) Priority: 19.06.2009 JP 2009146356
(71) Applicant: Mitsubishi Electric Corporation, Tokyo 100-8310 (JP)
(72) Inventor: ITANI, Yusuke, Tokyo 100-8310 (JP); SUGIMOTO, Kazuo, Tokyo 100-8310 (JP); SEKIGUCHI, Shunichi, Tokyo 100-8310 (JP); MINEZAWA, Akira, Tokyo 100-8310 (JP); MORIYA, Yoshimi, Tokyo 100-8310 (JP); HIWASA, Norimichi, Tokyo 100-8310 (JP); YAMAGISHI, Shuichi, Tokyo 100-8310 (JP); YAMADA, Yoshihisa, Tokyo 100-8310 (JP); KATO, Yoshiaki, Tokyo 100-8310 (JP); ASAI, Kohtaro, Tokyo 100-8310 (JP); MURAKAMI, Tokumichi, Tokyo 100-8310 (JP)
(74) Representative: Pfenning, Meinig & Partner GbR
(86) International application number: PCT/JP2010/003494
(87) International publication number: WO 2010/146772

(57) **Abstract**

A quantizing matrix selecting part 3 for calculating the average and variance of brightness values in a prediction image created by a motion-compensated prediction unit 1, and selecting a quantizing matrix corresponding to the average and variance of brightness values in the prediction image from among a plurality of quantizing matrices which are prepared in advance is disposed, and a quantizing part 6 quantizes orthogonal transformation coefficients outputted from an orthogonal transformation part 5 with reference to the quantizing matrix selected by the quantizing matrix selecting part 3.

## Description

### Field of the Invention

The present invention relates to an image encoding device for and an image encoding method of variable-length-encoding an inputted image, and an image decoding device for and an image decoding method of decoding an inputted image variable-length-encoded by the image encoding device.

### Background of the Invention

As a conventional image encoding device which performs intra-frame encoding (intra encoding), an image encoding device which uses an international standard method will be explained hereafter. The conventional image encoding device divides the screen into blocks each having 8 pixels x 8 lines, and performs a transformation from a space domain to a frequency domain by using a two-dimensional discrete cosine transform (DCT) for each divided block, as shown in, for example, ISO/IEC10918 (commonly called JPEG: refer to nonpatent reference 1) and ISO/IEC 14496-2 (commonly called MPEG-4visual: refer to nonpatent reference 2).
The conventional image encoding device then carries out a prediction process using the difference between the transform coefficients of a block which is a target to be encoded (transform coefficients from the space domain to the frequency domain), and the transform coefficients of a block adjacent to the block to calculate prediction residual transform coefficients.
The conventional image encoding device then performs a predetermined quantizing process on the prediction residual transform coefficients to calculate quantized values, and variable-length-encodes (Huffman-encodes) the quantized values.

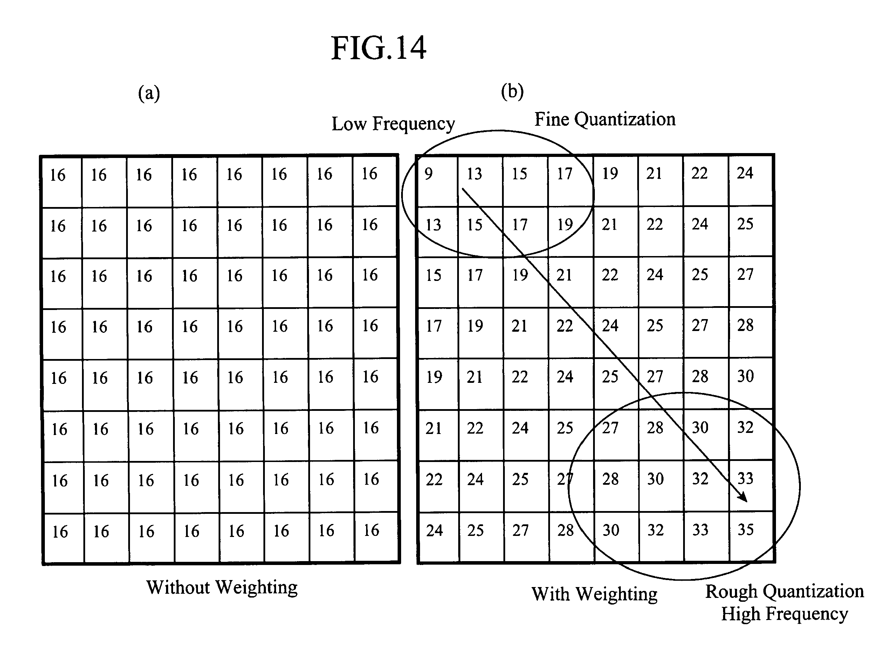

There is a case in which when performing the quantizing process, the image encoding device calculates the quantized values with reference to a quantizing matrix, and also performs a process of weighting the quantization according to the frequency band.
For example, there can be considered a case in which the image encoding device quantizes a low-frequency region of the prediction residual transform coefficients finely while quantizing a high-frequency region of the prediction residual transform coefficients roughly (refer to Fig. 14).
For example, if the conventional image encoding device can switch among quantizing matrices to which different weights are assigned as needed, the conventional image encoding device can provide a reduction in the code amount and an improvement in the subjective image quality.
However, when the image encoding device changes the quantizing matrix to which the image encoding device refers, because even an image decoding device needs to refer to the same quantizing matrix as that to be referred to by the image encoding device, the image encoding device needs to transmit the quantizing matrix to which the image encoding device refers to the image decoding device.

### Related art document

### Nonpatent reference

Nonpatent reference 1: ISO/IEC 10918-1 "Information technology -- Digital compression and coding of continuous-tone still images -- Part 1: Requirements and guidelines"
Nonpatent reference 2: ISO/IEC 14496-2 "Information technology -- Coding of audio-visual objects -- Part 2: Visual"

### Summary of the Invention

Because the conventional image encoding device is constructed as above, if the conventional image encoding device can switch among quantizing matrices as needed, the conventional image encoding device can provide a reduction in the code amount and an improvement in the subjective image quality. A problem is, however, that when the image encoding device changes the quantizing matrix to which the image encoding device refers, because even the image decoding device needs to refer to the same quantizing matrix as that to which the image encoding device refers, changing the quantizing matrix to be referred to and then transmitting the quantizing matrix to the image decoding device result in an increase in the code amount by the quantizing matrix and hence a reduction in the encoding efficiency.

The present invention is made in order to solve the above-mentioned problem, and it is therefore an object of the present invention to provide an image encoding device for and an image encoding method of switching among quantizing matrices by using information which the image encoding device shares with an image decoding device, thereby being able to improve the image quality without lowering the encoding efficiency.

It is another object of the present invention to provide an image decoding device for and an image decoding method of switching among quantizing matrices by using information which the image decoding device shares with an image encoding device, thereby being able to create a correct quantizing matrix and decode a bitstream even if any information about the quantizing matrix from the image encoding device is not acquired.

In accordance with the present invention, there is provided an image encoding device in which a quantizing matrix selecting unit for calculating an average and variance of brightness values in a prediction image created by a prediction image creating unit, and for selecting a quantizing matrix corresponding to the average and variance of the brightness values in the prediction image from among a plurality of quantizing matrices which are prepared in advance is disposed, and a quantizing unit refers to the quantizing matrix selected by the quantizing matrix selecting unit to quantize a difference image calculated by a difference image calculating unit.

In accordance with the present invention, there is provided an image decoding device in which a quantizing matrix selecting unit for calculating an average and variance of brightness values in a prediction image created by a prediction image creating unit to select a quantizing matrix corresponding to the average and variance of brightness values in the prediction image from among a plurality of quantizing matrices which are prepared in advance is disposed, and an inverse quantizing unit refers to the quantizing matrix selected by the quantizing matrix selecting unit to inverse-quantize a quantized difference image variable-length-decoded by a decoding unit.

In accordance with the present invention, because the image encoding device is constructed in such a way that the quantizing matrix selecting unit for calculating the average and variance of brightness values in the prediction image created by the prediction image creating unit, and for selecting a quantizing matrix corresponding to the average and variance of the brightness values in the prediction image from among the plurality of quantizing matrices which are prepared in advance is disposed, and the quantizing unit refers to the quantizing matrix selected by the quantizing matrix selecting unit to quantize the difference image calculated by the difference image calculating unit, the image encoding device can switch among the quantizing matrices by using the prediction image which is information which the image encoding device shares with the image decoding device. As a result, there is provided an advantage of being able to improve the image quality without lowering the encoding efficiency.

In accordance with the present invention, because the image decoding device is constructed in such a way that the quantizing matrix selecting unit for calculating the average and variance of brightness values in the prediction image created by the prediction image creating unit to select a quantizing matrix corresponding to the average and variance of brightness values in the prediction image from among the plurality of quantizing matrices which are prepared in advance is disposed, and the inverse quantizing unit refers to the quantizing matrix selected by the quantizing matrix selecting unit to inverse-quantize the quantized difference image variable-length-decoded by the decoding unit, the image decoding device can switch among the quantizing matrices by using the prediction image which is information which the image decoding device shares with the image encoding device. As a result, there is provided an advantage of being able to select the quantizing matrix which is referred to by the inverse quantizing unit without any information about the quantizing matrix from the image encoding device.

### Brief Description of the Figures

[Fig. 1] Fig. 1 is a block diagram showing an image encoding device in accordance with Embodiment 1 of the present invention;
[Fig. 2] Fig. 2 is a block diagram showing an image decoding device in accordance with Embodiment 1 of the present invention;
[Fig. 3] Fig. 3 is a flow chart showing a main part of a process carried out by the image encoding device in accordance with Embodiment 1 of the present invention;
[Fig. 4] Fig. 4 is a flow chart showing a main part of a process carried out by the image decoding device in accordance with Embodiment 1 of the present invention;
[Fig. 5] Fig. 5 is an explanatory drawing showing an example of quantizing matrices which are prepared in advance;
[Fig. 6] Fig. 6 is an explanatory drawing showing a scanning order defined in a quantizing matrix;
[Fig. 7] Fig. 7 is an explanatory drawing showing a typical scanning order (a zigzag scanning order);
[Fig. 8] Fig. 8 is a block diagram showing an image encoding device in accordance with Embodiment 2 of the present invention;
[Fig. 9] Fig. 9 is a block diagram showing an image decoding device in accordance with Embodiment 2 of the present invention;
[Fig. 10] Fig. 10 is a block diagram showing an image encoding device in accordance with Embodiment 3 of the present invention;
[Fig. 11] Fig. 11 is a block diagram showing an image decoding device in accordance with Embodiment 3 of the present invention;
[Fig. 12] Fig. 12 is a block diagram showing an image encoding device in accordance with Embodiment 4 of the present invention;
[Fig. 13] Fig. 13 is a block diagram showing an image decoding device in accordance with Embodiment 4 of the present invention; and
[Fig. 14] Fig. 14 is an explanatory drawing showing an example of a quantizing matrix in a case in which a low-frequency region is quantized finely while a high-frequency region is quantized roughly.

### Embodiments of the Invention

Hereafter, in order to explain this invention in greater detail, the preferred embodiments of the present invention will be described with reference to the accompanying drawings. Embodiment 1.

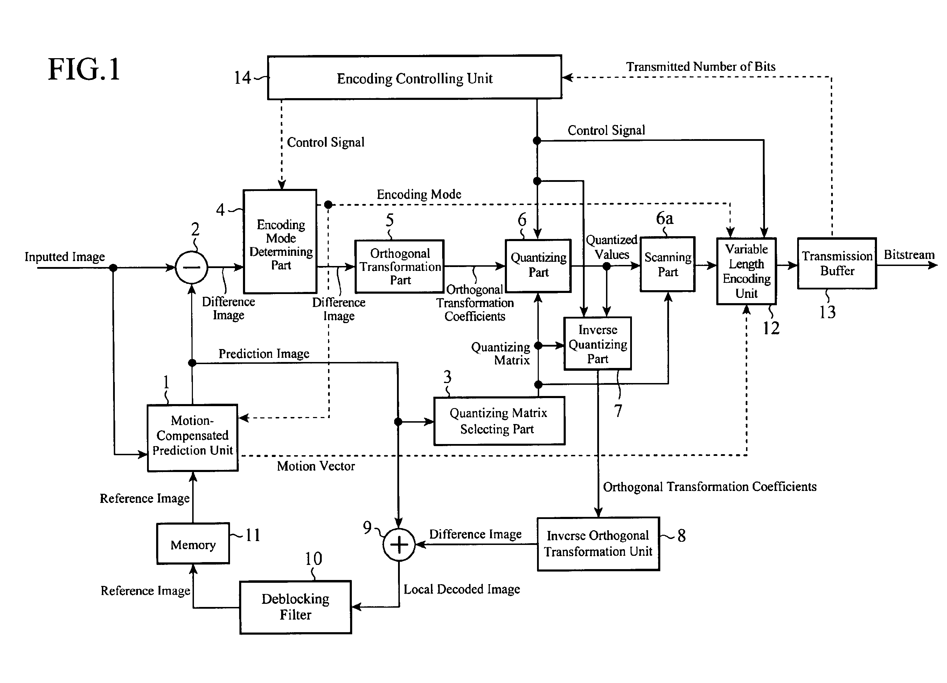

Fig. 1 is a block diagram showing an image encoding device in accordance with Embodiment 1 of the present invention.
When receiving an inputted image divided into blocks each having a predetermined block size, a motion-compensated prediction unit 1 shown in Fig. 1 carries out a process of creating a prediction image by detecting motion vectors from both the inputted image and a reference image stored in a memory 11, and performing a motion compensation process (a motion compensation process corresponding to an encoding mode determined by an encoding mode determining part 4) on the reference image by using the motion vectors. The motion-compensated prediction unit 1 constructs a prediction image creating unit.

A subtractor 2 carries out a process of calculating a difference image which is the difference between the inputted image and the prediction image created by the motion-compensated prediction unit 1. The subtractor 2 constructs a difference image calculating unit.
A quantizing matrix selecting part 3 carries out a process of calculating the average and variance of brightness values in the prediction image created by the motion-compensated prediction unit 1, and selecting a quantizing matrix corresponding to the average and variance of brightness values in the prediction image from among a plurality of quantizing matrices which are prepared in advance. The quantizing matrix selecting part 3 constructs a quantizing matrix selecting unit.

The encoding mode determining part 4 carries out a process of determining an encoding mode at the time of encoding the difference image calculated by the subtractor 2. The encoding mode determining part 4 constructs an encoding mode determining unit.
An orthogonal transformation part 5 carries out a process of performing an orthogonal transformation on the difference image calculated by the subtractor 2 to output orthogonal transformation coefficients of the difference image to a quantizing part 6. The orthogonal transformation part 5 constructs an orthogonal transformation unit.

The quantizing part 6 carries out a process of referring to the quantizing matrix selected by the quantizing matrix selecting part 3 to quantize the orthogonal transformation coefficients outputted from the orthogonal transformation part 5, and for outputting the quantized values of the orthogonal transformation coefficients to an inverse quantizing part 7 and a variable length encoding unit 12. The quantizing part 6 constructs a quantizing unit.
The quantization coefficients calculated by the quantizing part 6 are delivered to a scanning part 6a, and are subjected to scanning. At that time, the scanning part 6a carries out a process of scanning the quantization coefficients in the scanning order defined in the quantizing matrix selected by the quantizing matrix selecting part 3 to output the quantization coefficients to the variable length encoding unit 12.

The inverse quantizing part 7 carries out a process of calculating orthogonal transformation coefficients corresponding to the orthogonal transformation coefficients outputted from the orthogonal transformation part 5 by inverse-quantizing the quantized values outputted from the quantizing part 6 with reference to the quantizing matrix selected by the quantizing matrix selecting part 3.
An inverse orthogonal transformation unit 8 carries out a process of performing an inverse orthogonal transformation on the orthogonal transformation coefficients outputted from the inverse quantizing part 7 to calculate a difference image corresponding to the difference image outputted from the subtractor 2.
An adder 9 carries out a process of adding the prediction image created by the motion-compensated prediction unit 1 and the difference image calculated by the inverse orthogonal transformation unit 8 to create a local decoded image.

A deblocking filter 10 carries out a process of compensating for a distortion on the local decoded image outputted from the adder 9 to output the local decoded image distortion-compensated thereby as the reference image.
The memory 11 is a recording medium for storing the reference image outputted from the deblocking filter 10.
The variable length encoding unit 12 carries out a process of variable-length-encoding the motion vectors detected by the motion-compensated prediction unit 1, the encoding mode determined by the encoding mode determining part 4, and the quantized values outputted from the quantizing part 6.
A control signal and so on which are outputted from an encoding controlling unit 14 to the quantizing part 6 and the inverse quantizing part 7 are also variable-length-encoded, though not described above.
The variable length encoding unit 12 constructs an encoding unit.

A transmission buffer 13 carries out a process of temporarily storing the encoded results acquired by the variable length encoding unit 12, and then transmitting the results to an image decoding device as a bitstream.
The encoding controlling unit 14 monitors the transmission amount of the bitstream transmitted by the transmission buffer 13, and controls the processes carried out by the encoding mode determining part 4, the quantizing part 6, the inverse quantizing part 7, and the variable length encoding unit 12 according to the results of the monitoring.

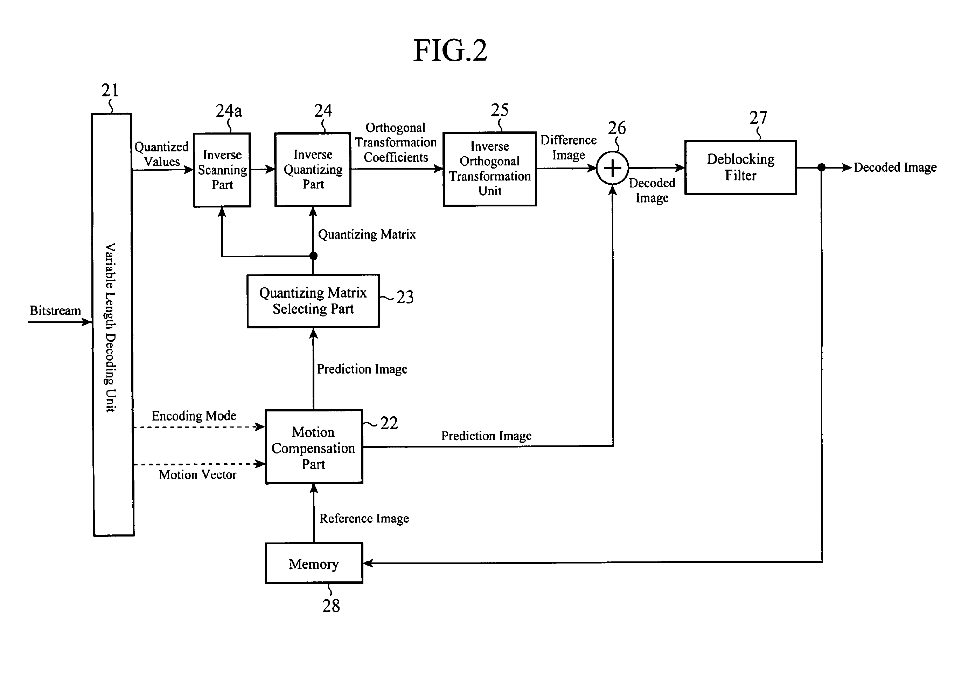

Fig. 2 is a block diagram showing the image decoding device in accordance with Embodiment 1 of the present invention.
A variable length decoding unit 21 shown in Fig. 2 receives the bitstream transmitted from the image encoding device, and carries out a process of variable-length-decoding the motion vectors (the motion vectors detected by the motion-compensated prediction unit 1 of Fig. 1) the encoding mode (the encoding mode determined by the encoding mode determining part 4 of Fig. 1), and the quantized values (the quantized values outputted from the quantizing part 6 of Fig. 1) from the bitstream. The variable length decoding unit 21 constructs a decoding unit.

A motion compensation unit 22 carries out a process of creating a prediction image (an image corresponding to the prediction image created by the motion-compensated prediction unit 1 of Fig. 1) by performing a motion compensation process (a motion compensation process corresponding to the encoding mode variable-length-decoded by the variable length decoding unit 21) on a reference image stored in a memory 28 by using the motion vectors variable-length-decoded by the variable length decoding unit 21. The motion compensation unit 22 constructs a prediction image creating unit.
A quantizing matrix selecting part 23 carries out a process of calculating the average and variance of brightness values in the prediction image created by the motion compensation unit 22, and for selecting a quantizing matrix corresponding to the average and variance of brightness values in the prediction image from among a plurality of quantizing matrices which are prepared in advance. The quantizing matrix selecting part 23 constructs a quantizing matrix selecting unit.

An inverse scanning part 24a refers to the quantizing matrix selected by the quantizing matrix selecting part 23, and inversely scans the quantization coefficients variable-length-decoded by the variable length decoding unit 21 in the scanning order defined in the quantizing matrix.
An inverse quantizing part 24 carries out a process of calculating orthogonal transformation coefficients corresponding to the orthogonal transformation coefficients outputted from the orthogonal transformation part 5 of Fig. 1 by inverse-quantizing the quantized values outputted from the inverse scanning part 24a with reference to the quantizing matrix selected by the quantizing matrix selecting part 23.
An inverse orthogonal transformation unit 25 carries out a process of performing an inverse orthogonal transformation on the orthogonal transformation coefficients outputted from the inverse quantizing part 24 to calculate a difference image corresponding to the difference image outputted from the subtractor 2 of Fig. 1.
An inverse quantizing unit is comprised of the inverse quantizing part 24 and the inverse orthogonal transformation unit 25.
An adder 26 carries out a process of adding the prediction image created by the motion compensation part 22 and the difference image calculated by the inverse orthogonal transformation unit 25 to create a decoded image. The adder 26 constructs an image adding unit.

A deblocking filter 27 carries out a process compensating for a distortion on the decoded image outputted from the adder 26 to output the decoded image distortion-compensated thereby (an image corresponding to the inputted image of Fig. 1) to the memory 28 as the reference image while outputting the decoded image to outside the image decoding device.
The memory 28 is a recording medium for storing the reference image outputted from the deblocking filter 27.

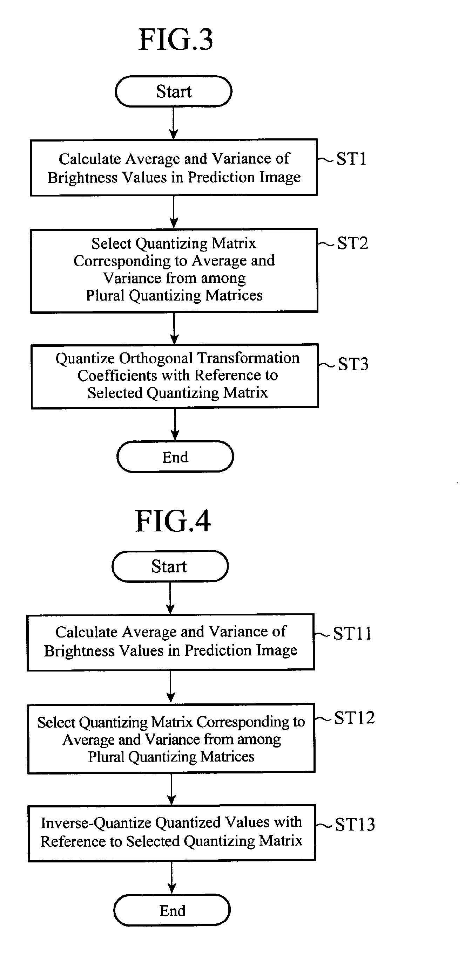

Fig. 3 is a flow chart showing a main part of the process carried out by the image encoding device in accordance with Embodiment 1 of the present invention, and Fig. 4 is a flow chart showing a main part of the process carried out by the image decoding device in accordance with Embodiment 1 of the present invention.

Next, the operation of the image encoding device and that of the image decoding device will be explained.
First, the process carried out by the image encoding device will be explained.
First, when receiving an inputted image which is divided into blocks each having a predetermined block size, the motion-compensated prediction unit 1 detects motion vectors from the inputted image and the reference image stored in the memory 11.
After detecting motion vectors, the motion-compensated prediction unit 1 performs a motion compensation process (a motion compensation process corresponding to the encoding mode determined by the encoding mode determining part 4) on the reference image by using the motion vectors to create a prediction image.

After the motion-compensated prediction unit 1 creates a prediction image, the subtractor 2 calculates a difference image which is the difference between the inputted image and the prediction image, and outputs the difference image to the encoding mode determining part 4.
After the subtractor 2 calculates a difference image, the encoding mode determining part 4 determines an encoding mode at the time of encoding the difference image.
After the subtractor 2 calculates a difference image, the orthogonal transformation part 5 performs an orthogonal transformation on the difference image, and outputs the orthogonal transformation coefficients of the difference image to the quantizing part 6.

The quantizing matrix selecting part 3 prepares a plurality of quantizing matrices in advance (for example, the quantizing matrix selecting part stores a plurality of quantizing matrices in an internal memory).

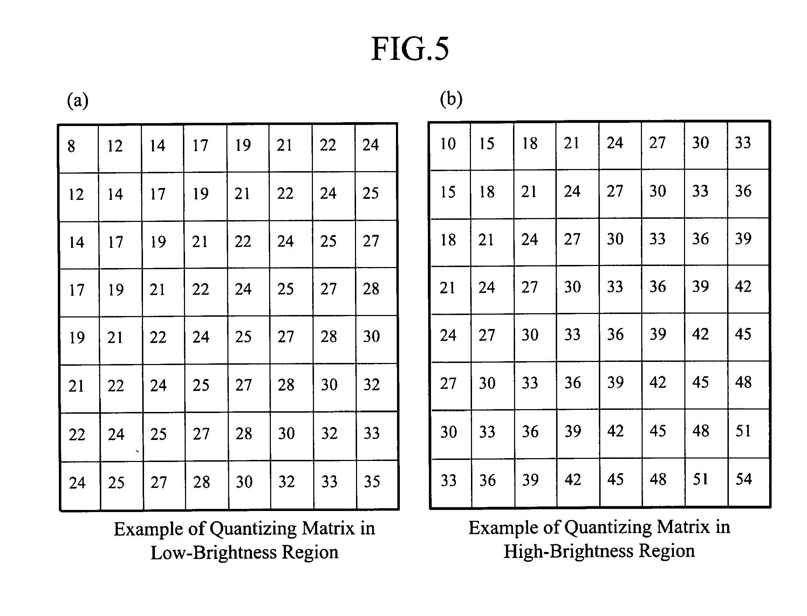

Fig. 5 is an explanatory drawing showing an example of the quantizing matrices which are prepared in advance.
Fig. 5 (a) is an example of the quantizing matrices which are suitable particularly for a case in which the prediction image has low brightness, and Fig. 5(b) is an example of the quantizing matrices which are suitable particularly for a case in which the prediction image has high brightness.

After the motion-compensated prediction unit 1 creates a prediction image, the quantizing matrix selecting part 3 calculates the average and variance of brightness values in the prediction image for each orthogonal transformation size (step ST1).
Although in this Embodiment 1 the quantizing matrix selecting part calculates the average and variance of brightness values in the prediction image for each orthogonal transformation size, this is only an example and the quantizing matrix selecting part can alternatively calculate the average and variance of brightness values in the prediction image for each macro block.
After calculating the average and variance of brightness values in the prediction image, the quantizing matrix selecting part 3 selects a quantizing matrix corresponding to the average and variance of brightness values in the prediction image from among the plurality of quantizing matrices which are prepared in advance (step ST2).

Hereafter, concrete examples of the selection of a quantizing matrix will be explained.
A case in which four quantizing matrices as will be shown below are prepared will be explained below as an example.
(1) A quantizing matrix A which is suitable for a case in which the average of brightness values of the prediction image is smaller than a reference brightness value (a predetermined reference value of brightness) and the variance of brightness values is larger than a reference variance (a predetermined reference value of variance)
(2) A quantizing matrix B which is suitable for a case in which the average of brightness values of the prediction image is smaller than the reference brightness value and the variance of brightness values is smaller than the reference variance
(3) A quantizing matrix C which is suitable for a case in which the average of brightness values of the prediction image is larger than the reference brightness value and the variance of brightness values is larger than the reference variance
(4) A quantizing matrix D which is suitable for a case in which the average of brightness values of the prediction image is larger than the reference brightness value and the variance of brightness values is smaller than the reference variance

The quantizing matrix selecting part 3 compares the average of brightness values in the prediction image with the reference brightness value to determine whether or not the average of brightness values is smaller than the reference brightness value.
The quantizing matrix selecting part 3 also compares the variance of brightness values in the prediction image with the reference variance to determine whether or not the variance of brightness is larger than the reference variance.

When the average of brightness values of the prediction image is smaller than the reference brightness value, the quantizing matrix selecting part 3 selects the quantizing matrix A if the variance of brightness is larger than the reference variance, or selects the quantizing matrix B otherwise.
In contrast, when the average of brightness values of the prediction image is equal to or larger than the reference brightness value, the quantizing matrix selecting part 3 selects the quantizing matrix C if the variance of brightness is larger than the reference variance, or selects the quantizing matrix D otherwise.

In general, there is a tendency that noise is conspicuous in a portion in which the average of brightness values is small and the variance of brightness values is small, whereas noise is hard to be conspicuous in a portion in which the average of brightness values is large and the variance of brightness values is large.
Therefore, the quantizing matrix selecting part uses a quantizing matrix which quantizes a low-frequency region finely, like the quantizing matrix shown in Fig. 5(a), for a portion in which the average of brightness values is small, whereas the quantizing matrix selecting part uses a quantizing matrix which quantizes a high-frequency region roughly, like the quantizing matrix shown in Fig. 5(b), for a portion in which the average of brightness values is large.
As a result, the code amount can be reduced while the block noise can be reduced and the quality of the image can be improved.

After the quantizing matrix selecting part 3 selects a quantizing matrix, the quantizing part 6 quantizes the orthogonal transformation coefficients outputted from the orthogonal transformation part 5 with reference to the quantizing matrix, and outputs the quantized values of the orthogonal transformation coefficients (e.g., values which the quantizing part acquires by dividing the orthogonal transformation coefficients by quantization coefficients) to the inverse quantizing part 7 and the variable length encoding unit 12 (step ST3).

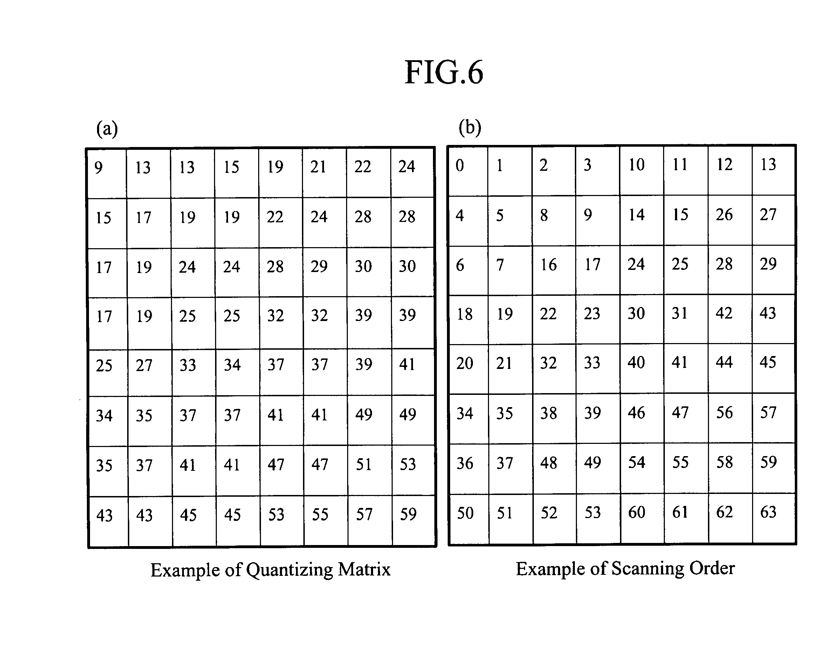

Fig. 6 is an explanatory drawing showing the scanning order defined in a quantizing matrix.
Fig. 6(b) shows the scanning order defined in the quantizing matrix of Fig. 6(a), and shows that the quantization coefficients are scanned in order of increasing numbers shown in Fig. 6(b).

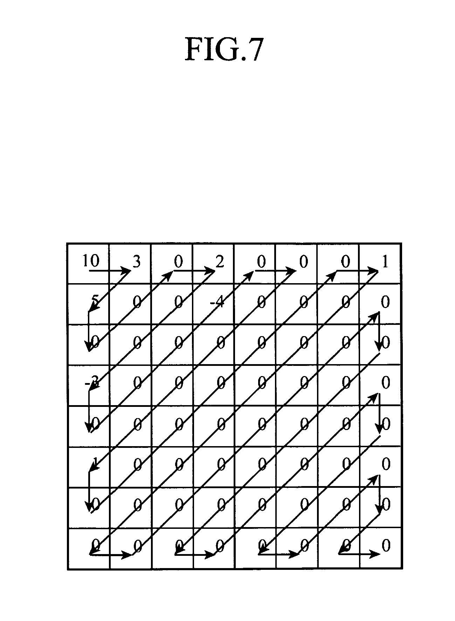

Fig. 7 is an explanatory drawing showing a typical scanning order (a zigzag scanning order).

Therefore, when scanning the quantization coefficients from the quantizing matrix selected by the quantizing matrix selecting part 3, the scanning part 6a scans the quantization coefficients in the scanning order defined in the quantizing matrix.
As a result, when the scanning order in which to scan the quantizing matrix is defined according to the weight of the quantizing matrix, the scanning part becomes able to scan the quantization coefficients other than "0" for the first time and omit the scanning of the remaining quantization coefficients of "0", for example.
In this case, the coefficients which are the target for variable length encoding can be reduced, and the code amount can be reduced.

When receiving the quantized values from the quantizing part 6, the inverse quantizing part 7 calculates orthogonal transformation coefficients corresponding to the orthogonal transformation coefficients outputted from the orthogonal transformation part 5 (e.g., values which the inverse quantizing unit acquires by multiplying each of the quantized values by a quantization coefficient) by inverse-quantizing the quantized values with reference to the quantizing matrix selected by the quantizing matrix selecting part 3.
The scanning order in which to scan the quantization coefficients in the inverse quantizing part 7 is the same as that in which to scan the quantization coefficients in the quantizing part 6.

After the inverse quantizing part 7 calculates orthogonal transformation coefficients, the inverse orthogonal transformation unit 8 calculates a difference image corresponding to the difference image outputted from the subtractor 2 by performing an inverse orthogonal transformation on the orthogonal transformation coefficients.
After the inverse orthogonal transformation unit 8 calculates a difference image, the adder 9 adds the difference image and the prediction image created by the motion-compensated prediction unit 1 to create a local decoded image.
When receiving the local decoded image from the adder 9, the deblocking filter 10 compensates for a distortion on the local decoded image (e.g., block noise), and stores the local decoded image distortion-compensated thereby in the memory 11 as the reference image.

The variable length encoding unit 12 carries out the process of variable-length-encoding the motion vectors detected by the motion-compensated prediction unit 1, the encoding mode determined by the encoding mode determining part 4, and the quantized values outputted from the quantizing part 6.
The transmission buffer 13 temporarily stores the encoded results acquired by the variable length encoding unit 12, and transmits the encoded results to the image decoding device as a bitstream.

Next, the process carried out by the image decoding device will be explained.
When receiving the bitstream transmitted from the image encoding device, the variable length decoding unit 21 variable-length-decodes the motion vectors (the motion vectors detected by the motion-compensated prediction unit 1 of Fig. 1) the encoding mode (the encoding mode determined by the encoding mode determining part 4 of Fig. 1), and the quantized values (the quantized values outputted from the quantizing part 6 of Fig. 1) from the bitstream.
When receiving the motion vectors from the variable length decoding unit 21, the motion compensation unit 22 creates a prediction image (an image corresponding to the prediction image created by the motion-compensated prediction unit 1 of Fig. 1) by performing a motion compensation process (a motion compensation process corresponding to the encoding mode variable-length-decoded by the variable length decoding unit 21) on the reference image stored in the memory 28 by using the motion vectors.

The quantizing matrix selecting part 23 prepares the same quantizing matrices as those prepared by the quantizing matrix selecting part 3 of Fig. 1 in advance.
After the motion compensation part 22 creates a prediction image, the quantizing matrix selecting part 23 calculates the average and variance of brightness values in the prediction image, like the quantizing matrix selecting part 3 of Fig. 1 (step ST11).
After calculating the average and variance of brightness values in the prediction image, the quantizing matrix selecting part 23 selects a quantizing matrix corresponding to the average and variance of brightness values in the prediction image from among the plurality of quantizing matrices which are prepared in advance, like the quantizing matrix selecting part 3 of Fig. 1 (step ST12). More specifically, the quantizing matrix selecting part selects the same quantizing matrix as that selected by the quantizing matrix selecting part 3 of Fig. 1.
After the quantizing matrix selecting part 23 selects a quantizing matrix, the inverse scanning part 24a scans the quantizing matrix according to the inverse scanning method defined in the quantizing matrix. More specifically, the inverse scanning part uses the same scanning method as that used by the scanning part 6a of Fig. 1.

After the quantizing matrix selecting part 23 selects a quantizing matrix, the inverse quantizing part 24 calculates orthogonal transformation coefficients corresponding to the orthogonal transformation coefficients outputted from the orthogonal transformation part 5 of Fig. 1 by inverse-quantizing the quantized values variable-length-decoded by the variable length decoding unit 21 with reference to the quantizing matrix, like the inverse quantizing part 7 of Fig. 1 (step ST13).
After the inverse quantizing part 24 calculates orthogonal transformation coefficients, the inverse orthogonal transformation unit 25 calculates a difference image corresponding to the difference image outputted from the subtractor 2 of Fig. 1 by performing an inverse orthogonal transformation on the orthogonal transformation coefficients.
After the inverse orthogonal transformation unit 25 calculates a difference image, the adder 26 adds the difference image and the prediction image created by the motion-compensated prediction unit 22 to create a decoded image.

When receiving the decoded image from the adder 26, the deblocking filter 27 compensates for a distortion on the decoded image (e.g., block noise), like the deblocking filter 10 of Fig. 1, and stores the decoded image distortion-compensation thereby (an image corresponding to the inputted image of Fig. 1) in the memory 28 as the reference image while outputting the decoded image to outside the image decoding device.

As can be seen from the above description, the image encoding device in accordance with this Embodiment 1 is constructed in such a way that the quantizing matrix selecting part 3 for calculating the average and variance of brightness values in a prediction image created by the motion-compensated prediction unit 1, and selecting a quantizing matrix corresponding to the average and variance of brightness values in the prediction image from among the plurality of quantizing matrices which are prepared in advance is disposed, and the quantizing part 6 quantizes orthogonal transformation coefficients outputted from the orthogonal transformation part 5 with reference to the quantizing matrix selected by the quantizing matrix selecting part 3. Therefore, the image encoding device in accordance with this Embodiment 1 can switch among the quantizing matrices by using the prediction image which is information which the image encoding device shares with the image decoding device, and, as a result, becomes unnecessary to encode information about the quantizing matrix which is referred to by the quantizing part 6. Therefore, the image encoding device provides an advantage of being able to improve the image quality without lowering the encoding efficiency.

Furthermore, the image decoding device in accordance with this Embodiment 1 is constructed in such a way that the quantizing matrix selecting part 23 for calculating the average and variance of brightness values in a prediction image created by the motion compensation part 22, and for selecting a quantizing matrix corresponding to the average and variance of brightness values in the prediction image from among the plurality of quantizing matrices which are prepared in advance is disposed, and the inverse quantizing part 24 inverse-quantizes quantized values variable-length-decoded by the variable length decoding unit 21 with reference to the quantizing matrix selected by the quantizing matrix selecting part 23. Therefore, the image decoding device in accordance with this Embodiment 1 can switch among the quantizing matrices by using the prediction image which is information which the image decoding device shares with the image encoding device. As a result, the image decoding device provides an advantage of being able to select a quantizing matrix which is referred to by the inverse quantizing part 24 without any information about the quantizing matrix from the image encoding device.

Furthermore, the quantizing part 6 of the image encoding device in accordance with this Embodiment 1 is constructed in such a way that the scanning part 6a scans the quantization coefficients from the quantizing matrix selected by the quantizing matrix selecting part 3 in the scanning order defined in the quantizing matrix, there is provided an advantage of being able to reduce the coefficients which are the target to be encoded, and reduce the code amount.
Although the quantizing matrix selecting part 3 in accordance with this Embodiment 1 is constructed in such a way as to select a quantizing matrix corresponding to the average and variance of brightness values in the prediction image, the quantizing matrix selecting part can alternatively select a quantizing matrix only from the average of brightness values in the prediction image. As an alternative, the quantizing matrix selecting part can select a quantizing matrix only from the variance of brightness values in the prediction image.
In this case, because the encoding performance degrades a little, but the amount of information to be processed which is required for the selection can be reduced, this case is effective for an image encoding device intended for low power consumption, such as a mobile terminal.
Furthermore, although the quantizing matrix selecting part 3 in accordance with this Embodiment 1 uses a brightness signal in the prediction image, the use of a color difference signal together with the brightness signal is also effective.
In this case, although the amount of information to be processed required for the selection increases, the encoding performance can be further improved.
Furthermore, it is also effective to change quantizing matrices which can be selected between the brightness signal and the color difference signal.
In this case, although the amount of information to be processed required for the selection increases, the encoding performance can be improved.

### Embodiment 2.

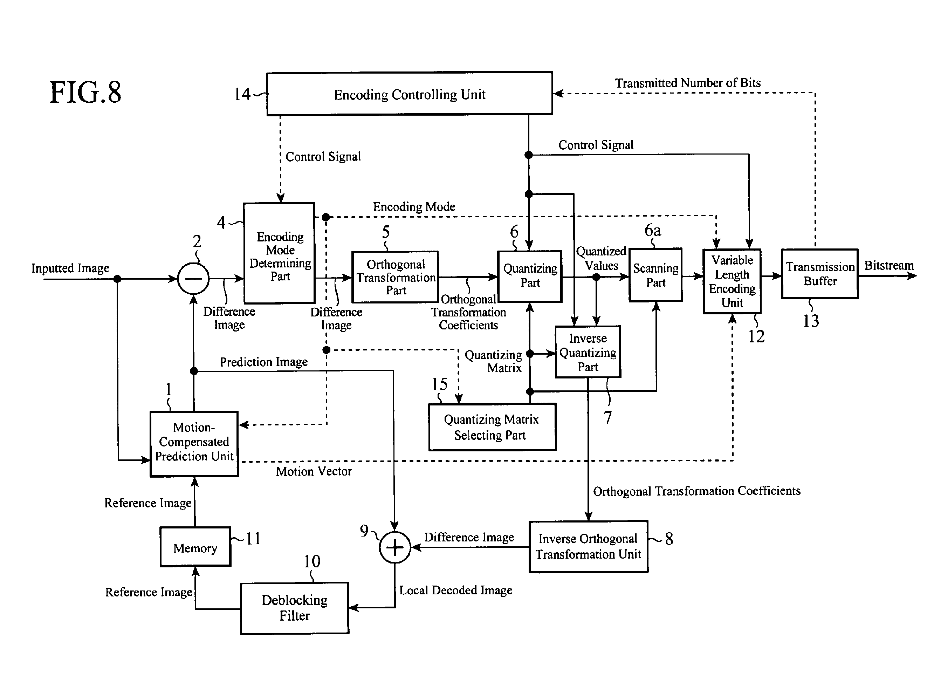

Fig. 8 is a block diagram showing an image encoding device in accordance with Embodiment 2 of the present invention. In the figure, because the same reference numerals as those shown in Fig. 1 show the same components or like components, the explanation of the components will be omitted hereafter.
When an encoding mode determined by an encoding mode determining part 4 is an intra prediction mode, a quantizing matrix selecting part 15 carries out a process of selecting a quantizing matrix corresponding to the direction of intra prediction in the intra prediction mode from among a plurality of quantizing matrices which are prepared in advance.
In contrast, when the encoding mode determined by the encoding mode determining part 4 is an inter prediction mode, the quantizing matrix selecting part 15 can select a specific quantizing matrix or select a quantizing matrix by using a method in accordance with Embodiment 3 which will be mentioned later.
The quantizing matrix selecting part 15 constructs a quantizing matrix selecting unit.

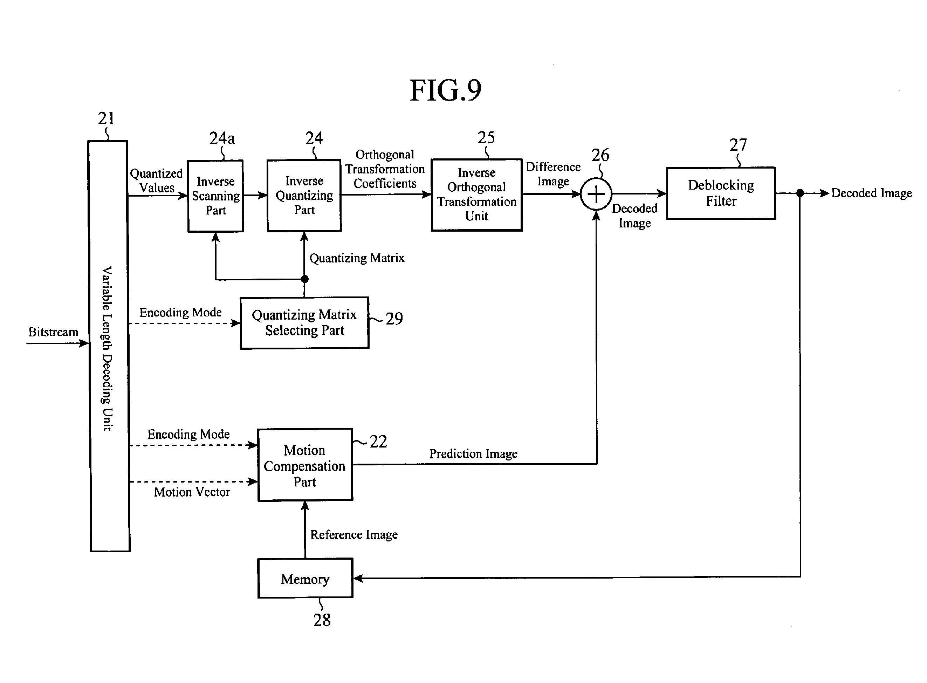

Fig. 9 is a block diagram showing an image decoding device in accordance with Embodiment 2 of the present invention. In the figure, because the same reference numerals as those shown in Fig. 2 show the same components or like components, the explanation of the components will be omitted hereafter.
When the encoding mode variable-length-decoded by a variable length decoding unit 21 is an intra prediction mode, a quantizing matrix selecting part 29 carries out a process of selecting a quantizing matrix corresponding to the direction of intra prediction in the intra prediction mode from a plurality of quantizing matrices which are prepared in advance.
In contrast, when the encoding mode variable-length-decoded by the variable length decoding unit 21 is an inter prediction mode, the quantizing matrix selecting part 29 can select a specific quantizing matrix or select a quantizing matrix by using the method in accordance with Embodiment 3 which will be mentioned later.
The quantizing matrix selecting part 29 constructs a quantizing matrix selecting unit.

Although in above-mentioned Embodiment 1 each of the quantizing matrix selecting parts 3 and 23 selects a quantizing matrix corresponding to the average and variance of brightness values in the prediction image, as previously mentioned, each of the quantizing matrix selecting parts 15 and 29 can select a quantizing matrix corresponding to a direction of intra prediction.
Concretely, each of the quantizing matrix selecting parts selects a quantizing matrix as follows.

The quantizing matrix selecting part 15 of the image encoding device prepares a plurality of quantizing matrices in advance. For example, the quantizing matrix selecting part prepares a quantizing matrix corresponding to each of a plurality of directions of intra prediction.
When the encoding mode determined by the encoding mode determining part 4 is an intra prediction mode, the quantizing matrix selecting part 15 selects a quantizing matrix corresponding to the direction of intra prediction in the intra prediction mode from among the plurality of quantizing matrices which are prepared in advance.

For example, because it can be considered that there exists an edge in a horizontal direction when the direction of intra prediction is a horizontal direction, the quantizing matrix selecting part selects a quantizing matrix on which a weight is put in the horizontal direction, whereas because it can be considered that there exists an edge in a vertical direction when the direction of intra prediction is a vertical direction, the quantizing matrix selecting part selects a quantizing matrix on which a weight is put in the vertical direction.
A scanning order is defined for each of the quantizing matrices which are prepared in advance, and switching among the scanning orders is performed according to the weight or a feature (edge pattern) of the image, like in the case of above-mentioned Embodiment 1.

The quantizing matrix selecting part 29 of the image decoding device prepares the same quantizing matrices as those prepared by the quantizing matrix selecting part 15 of Fig. 8 in advance. When the encoding mode variable-length-decoded by the variable length decoding unit 21 is an intra prediction mode, the quantizing matrix selecting part 29 selects a quantizing matrix corresponding to the direction of intra prediction from among the plurality of quantizing matrices which are prepared in advance, like the quantizing matrix selecting part 15 of Fig. 8.

As can be seen from the above description, the image encoding device in accordance with this Embodiment 2 is constructed in such a way that the quantizing matrix selecting part 15 for, when the encoding mode determined by the encoding mode determining part 4 is an intra prediction mode, selecting a quantizing matrix corresponding to the direction of intra prediction in the intra prediction mode from the plurality of quantizing matrices which are prepared in advance is disposed, and a quantizing part 6 quantizes orthogonal transformation coefficients outputted from an orthogonal transformation part 5 with reference to the quantizing matrix selected by the quantizing matrix selecting part 15. Therefore, the image encoding device in accordance with this Embodiment 2 can switch among the quantizing matrices by using the direction of intra prediction which is information which the image encoding device shares with the image decoding device, and, as a result, becomes unnecessary to encode information about the quantizing matrix which is referred to by the quantizing part 6. Therefore, the image encoding device provides an advantage of being able to improve the image quality without lowering the encoding efficiency.

Furthermore, the image decoding device in accordance with this Embodiment 2 is constructed in such a way that the quantizing matrix selecting part 29 for, when the encoding mode variable-length-decoded by the variable length decoding unit 21 is an intra prediction mode, selecting a quantizing matrix corresponding to the direction of intra prediction in the intra prediction mode from among the plurality of quantizing matrices which are prepared in advance is disposed, and an inverse quantizing part 24 inverse-quantizes the quantized values variable-length-decoded by the variable length decoding unit 21 with reference to the quantizing matrix selected by the quantizing matrix selecting part 29. Therefore, the image decoding device in accordance with this Embodiment 2 can switch among the quantizing matrices by using the direction of intra prediction which is information which the image decoding device shares with the image encoding device. As a result, the image decoding device provides an advantage of being able to select a quantizing matrix which is referred to by the inverse quantizing part 24 without any information about the quantizing matrix from the image encoding device.

### Embodiment 3.

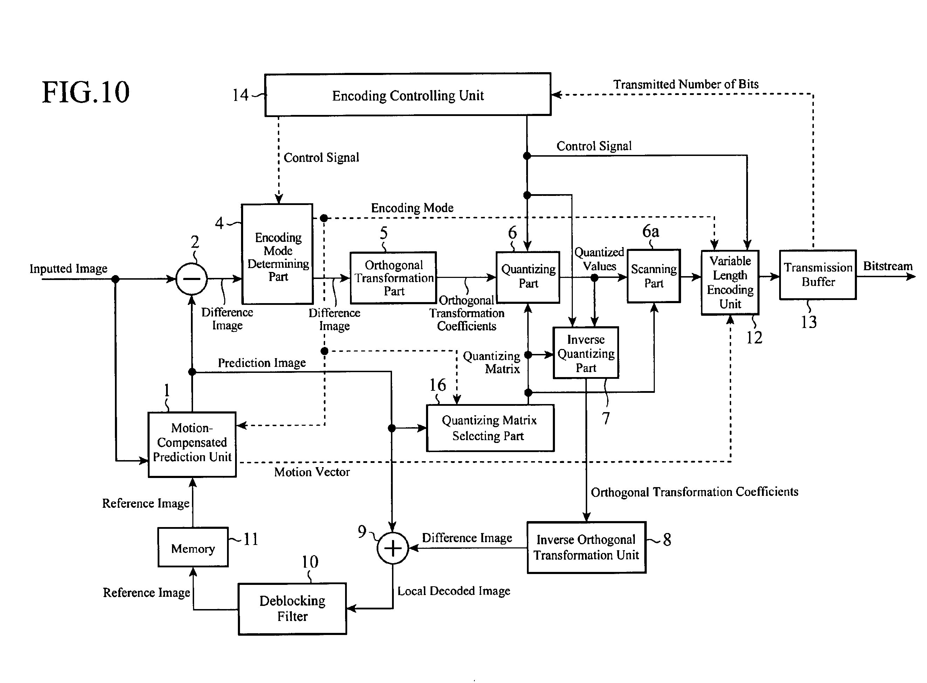

Fig. 10 is a block diagram showing an image encoding device in accordance with Embodiment 3 of the present invention. In the figure, because the same reference numerals as those shown in Figs. 1 and 8 show the same components or like components, the explanation of the components will be omitted hereafter.
When an encoding mode determined by an encoding mode determining part 4 is an intra prediction mode, a quantizing matrix selecting part 16 carries out a process of selecting a quantizing matrix corresponding to the direction of intra prediction in the intra prediction mode from among a plurality of quantizing matrices which are prepared in advance. In contrast, when the encoding mode is an inter prediction mode, the quantizing matrix selecting part 16 carries out a process of calculating the average and variance of brightness values in a prediction image created by a motion-compensated prediction unit 1, and selecting a quantizing matrix corresponding to the average and variance of brightness values in the prediction image from among a plurality of quantizing matrices which are prepared in advance. The quantizing matrix selecting part 16 constructs a quantizing matrix selecting unit.

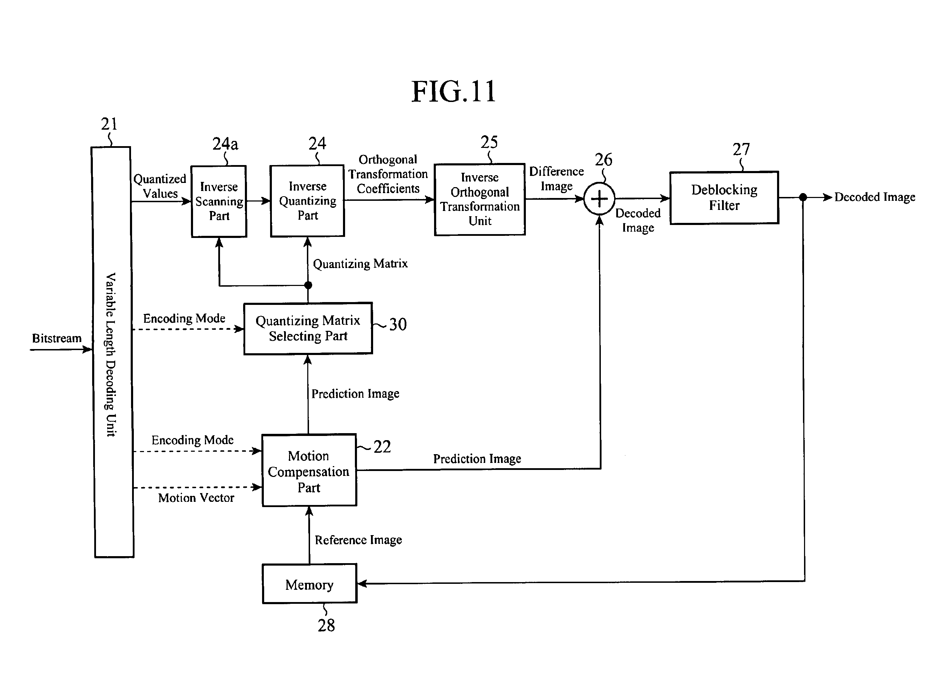

Fig. 11 is a block diagram showing an image decoding device in accordance with Embodiment 3 of the present invention. In the figure, because the same reference numerals as those shown in Figs. 2 and 9 show the same components or like components, the explanation of the components will be omitted hereafter.
When an encoding mode variable-length-decoded by a variable length decoding unit 21 is an intra prediction mode, a quantizing matrix selecting part 30 carries out a process of selecting a quantizing matrix corresponding to the direction of intra prediction in the intra prediction mode from among a plurality of quantizing matrices which are prepared in advance. In contrast, when the encoding mode is an inter prediction mode, the quantizing matrix selecting part 30 carries out a process of calculating the average and variance of brightness values in a prediction image created by a motion compensation part 22, and selecting a quantizing matrix corresponding to the average and variance of brightness values in the prediction image from among a plurality of quantizing matrices which are prepared in advance. The quantizing matrix selecting part 30 constructs a quantizing matrix selecting unit.

In above-mentioned Embodiment 1, each of the quantizing matrix selecting parts 3 and 23 selects a quantizing matrix corresponding to the average and variance of brightness values in the prediction image, as previously mentioned. In above-mentioned Embodiment 2, each of the quantizing matrix selecting parts 15 and 29 selects a quantizing matrix corresponding to the direction of intra prediction, as previously mentioned. In contrast, each of the quantizing matrix selecting parts 16 and 30 can select a quantizing matrix corresponding to the direction of intra prediction when the encoding mode is an intra prediction mode, while each of the quantizing matrix selecting parts 16 and 30 can select a quantizing matrix corresponding to the average and variance of brightness values in the prediction image when the encoding mode is an inter prediction mode.
Concretely, each of the quantizing matrix selecting parts selects a quantizing matrix as follows.

The quantizing matrix selecting part 16 of the image encoding device prepares a plurality of quantizing matrices in advance. For example, the quantizing matrix selecting part prepares quantizing matrices respectively corresponding to a plurality of directions of intra prediction, and quantizing matrices respectively corresponding to plural averages and variances of brightness values.
When the encoding mode determined by the encoding mode determining part 4 is an intra prediction mode, the quantizing matrix selecting part 16 selects a quantizing matrix corresponding to the direction of intra prediction in the intra prediction mode from among the plurality of quantizing matrices which are prepared in advance, like the quantizing matrix selecting part 15 of Fig. 8.
In contrast, when the encoding mode determined by the encoding mode determining part 4 is an inter prediction mode, the quantizing matrix selecting part calculates the average and variance of brightness values in the prediction image created by the motion-compensated prediction unit 1, and selects a quantizing matrix corresponding to the average and variance of brightness values in the prediction image from among the plurality of quantizing matrices which are prepared in advance, like the quantizing matrix selecting part 3 of Fig. 1.

The quantizing matrix selecting part 30 of the image decoding device prepares the same quantizing matrices as those prepared by the quantizing matrix selecting part 16 of Fig. 10 in advance.
When the encoding mode variable-length-decoded by the variable length decoding unit 21 is an intra prediction mode, the quantizing matrix selecting part 30 selects a quantizing matrix corresponding to the direction of intra prediction in the intra prediction mode from among the plurality of quantizing matrices which are prepared in advance, like the quantizing matrix selecting part 16 of Fig. 10.
In contrast, when the encoding mode variable-length-decoded by the variable length decoding unit 21 is an inter prediction mode, the quantizing matrix selecting part calculates the average and variance of brightness values in the prediction image created by the motion compensation part 22, and selects a quantizing matrix corresponding to the average and variance of brightness values in the prediction image from among the plurality of quantizing matrices which are prepared in advance.

As can be seen from the above description, the image encoding device in accordance with this Embodiment 3 is constructed in such a way that the quantizing matrix selecting part 16 for, when the encoding mode determined by the encoding mode determining part 4 is an intra prediction mode, selecting a quantizing matrix corresponding to the direction of intra prediction in the intra prediction mode from among the plurality of quantizing matrices which are prepared in advance is disposed, and, when the encoding mode is an inter prediction mode, calculates the average and variance of brightness values in the prediction image created by the motion compensation part 1, and selects a quantizing matrix corresponding to the average and variance of brightness values in the prediction image from among the plurality of quantizing matrices which are prepared in advance, and a quantizing part 6 quantizes orthogonal transformation coefficients outputted from an orthogonal transformation part 5 with reference to the quantizing matrix selected by the quantizing matrix selecting part 16. Therefore, the image encoding device in accordance with this Embodiment 3 can switch among the quantizing matrices by using the direction of intra prediction and the prediction image which are information which the image encoding device shares with the image decoding device, and, as a result, becomes unnecessary to encode information about the quantizing matrix which is referred to by the quantizing part 6. Therefore, the image encoding device provides an advantage of being able to improve the image quality without lowering the encoding efficiency.
There is provided another advantage of, even when the encoding mode determined by the encoding mode determining part 4 is either an intra prediction mode or an inter prediction mode, being able to select an appropriate quantizing matrix.

Furthermore, the image decoding device in accordance with this Embodiment 3 is constructed in such a way that the quantizing matrix selecting part 30 for, when the encoding mode variable-length-decoded by the variable length decoding unit 21 is an intra prediction mode, selecting a quantizing matrix corresponding to the direction of intra prediction in the intra prediction mode from among the plurality of quantizing matrices which are prepared in advance, and for, when the encoding mode is an inter prediction mode, calculating the average and variance of brightness values in the prediction image created by the motion compensation part 22, and selecting a quantizing matrix corresponding to the average and variance of brightness values in the prediction image from among the plurality of quantizing matrices which are prepared in advance is disposed, and an inverse quantizing part 24 inverse-quantizes the quantized values variable-length-decoded by the variable length decoding unit 21 with reference to the quantizing matrix selected by the quantizing matrix selecting part 30. Therefore, the image decoding device in accordance with this Embodiment 3 can switch among the quantizing matrices by using the direction of intra prediction and the prediction image which are information which the image decoding device shares with the image encoding device. As a result, the image decoding device provides an advantage of being able to select an appropriate quantizing matrix which is referred to by the inverse quantizing part 24 without any information about the quantizing matrix from the image encoding device.
There is provided another advantage of, even when the encoding mode variable-length-decoded by the variable length decoding unit 21 is either an intra prediction mode or an inter prediction mode, being able to select an appropriate quantizing matrix.

### Embodiment 4.

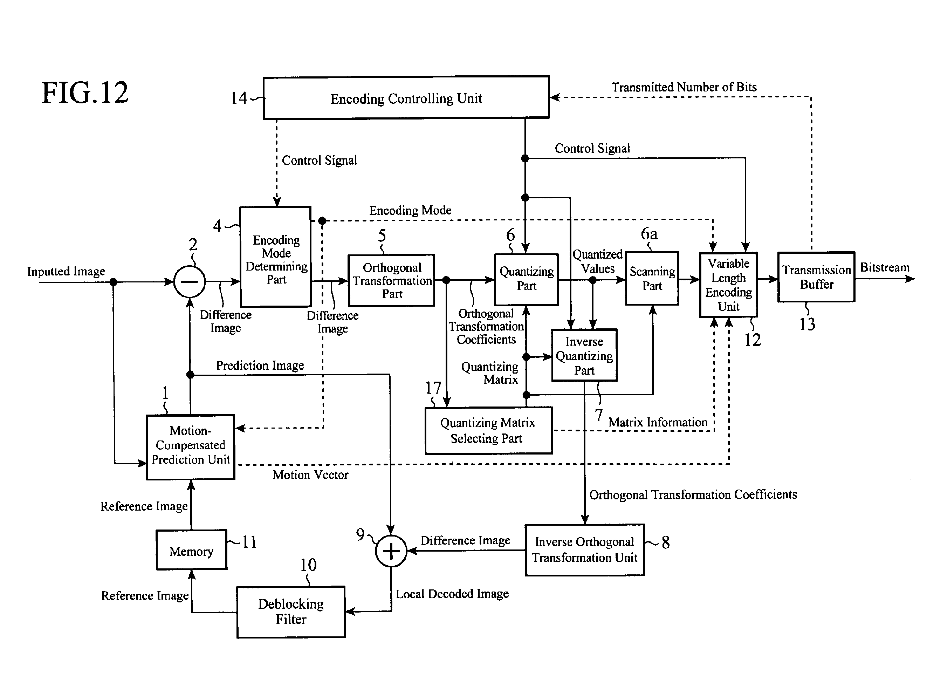

Fig. 12 is a block diagram showing an image encoding device in accordance with Embodiment 4 of the present invention. In the figure, because the same reference numerals as those shown in Fig. 1 show the same components or like components, the explanation of the components will be omitted hereafter.
A quantizing matrix selecting part 17 carries out a process of extracting an edge pattern from orthogonal transformation coefficients outputted from an orthogonal transformation part 5, and selecting a quantizing matrix corresponding to the edge pattern from among a plurality of quantizing matrices which are prepared in advance. The quantizing matrix selecting part 17 constructs a quantizing matrix selecting unit.
A variable length encoding unit 18 carries out a process of variable-length-encoding motion vectors detected by a motion-compensated prediction unit 1, an encoding mode determined by an encoding mode determining part 4, quantized values outputted from a quantizing part 6, and matrix information showing the quantizing matrix selected by the quantizing matrix selecting part 17. The variable length encoding unit 18 constructs an encoding unit.

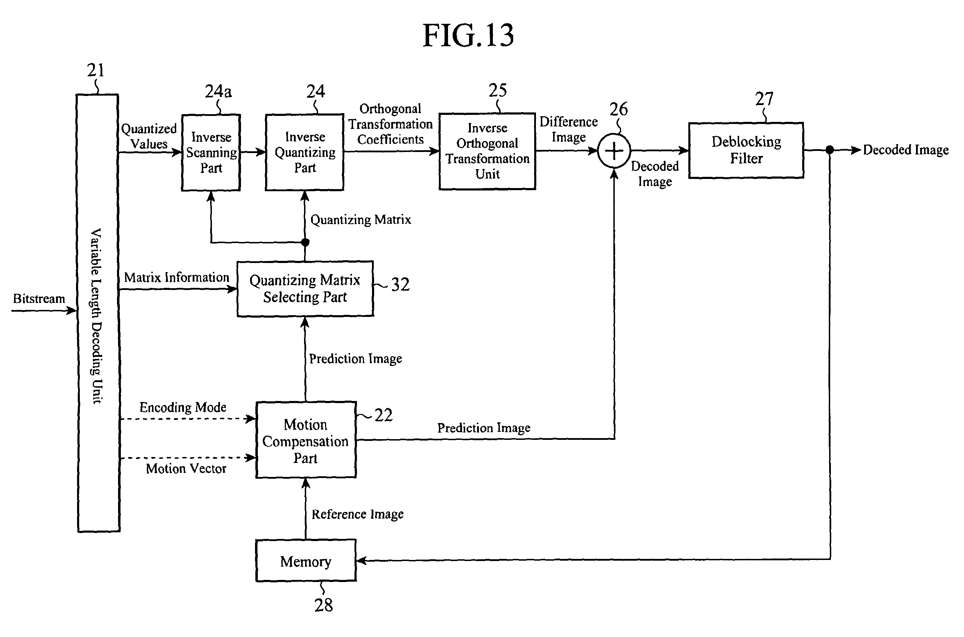

Fig. 13 is a block diagram showing an image decoding device in accordance with Embodiment 4 of the present invention. In the figure, because the same reference numerals as those shown in Fig. 2 show the same components or like components, the explanation of the components will be omitted hereafter.
When receiving a bitstream transmitted from the image encoding device, a variable length decoding unit 31 carries out a process of variable-length-decoding motion vectors (motion vectors detected by the motion-compensated prediction unit 1 of Fig. 12), an encoding mode (encoding mode determined by the encoding mode determining part 4 of Fig. 12), quantized values (quantized values outputted from the quantizing part 6 of Fig. 12), and matrix information (matrix information outputted from the quantizing matrix selecting part 17 of Fig. 12) from the bitstream. The variable length decoding unit 31 constructs a decoding unit.
A quantizing matrix selecting part 32 carries out a process of selecting a quantizing matrix shown by the matrix information variable-length-decoded by the variable length decoding unit 31 from among a plurality of quantizing matrices which are prepared in advance. The quantizing matrix selecting part 32 constructs a quantizing matrix selecting unit.

Although in above-mentioned Embodiment 1 each of the quantizing matrix selecting parts 3 and 23 selects a quantizing matrix corresponding to the average and variance of brightness values in a prediction image, as previously mentioned, each of the quantizing matrix selecting parts 17 and 32 can select a quantizing matrix corresponding to the edge pattern extracted from the orthogonal transformation coefficients.
Concretely, each of the quantizing matrix selecting parts selects a quantizing matrix as follows.

The quantizing matrix selecting part 17 of the image encoding device prepares a plurality of quantizing matrices in advance. For example, the quantizing matrix selecting part prepares a plurality of quantizing matrices respectively corresponding to a plurality of edge patterns.
When receiving the orthogonal transformation coefficients from the orthogonal transformation part 5, the quantizing matrix selecting part 17 extracts the edge pattern from the orthogonal transformation coefficients.

After extracting the edge pattern from the orthogonal transformation coefficients, the quantizing matrix selecting part 17 selects a quantizing matrix corresponding to the edge pattern from among the plurality of quantizing matrices which are prepared in advance.
A scanning order is defined for each of the quantizing matrices which are prepared in advance, and switching among the scanning orders is performed according to the edge pattern, like in the case of above-mentioned Embodiment 1.

The variable length encoding unit 18 also variable-length-encodes the matrix information showing the quantizing matrix selected by the quantizing matrix selecting part 17, as well as the motion vectors detected by the motion-compensated prediction unit 1, the encoding mode determined by the encoding mode determining part 4 and the quantized values outputted from the quantizing part 6, like the variable length encoding unit 12 of Fig. 1.

The variable length decoding unit 31 of the image decoding device receives the bitstream transmitted from the image encoding device, and variable-length-decodes the matrix information (matrix information outputted from the quantizing matrix selecting part 17 of Fig. 12), as well as the motion vectors (motion vectors detected by the motion-compensated prediction unit 1 of Fig. 12), from the bitstream, the encoding mode (encoding mode determined by the encoding mode determining part 4 of Fig. 12), and the quantized values (quantized values outputted from the quantizing part 6 of Fig. 12) from the bitstream, like the variable length decoding unit 21 of Fig. 2.

The quantizing matrix selecting part 32 prepares the same quantizing matrices as those prepared by the quantizing matrix selecting part 17 of Fig. 12 in advance.
The quantizing matrix selecting part 32 selects a quantizing matrix shown by the matrix information variable-length-decoded by the variable length decoding unit 31 from among the plurality of quantizing matrices which are prepared in advance. More specifically, the quantizing matrix selecting part selects the same quantizing matrix as that selected by the quantizing matrix selecting part 17 of the image encoding device.

As can be seen from the above description, the image encoding device in accordance with this Embodiment 4 is constructed in such a way that the quantizing matrix selecting part 17 for extracting the edge pattern from the orthogonal transformation coefficients outputted from the orthogonal transformation part 5, and selecting a quantizing matrix corresponding to the edge pattern from among the plurality of quantizing matrices which are prepared in advance is disposed, and the quantizing part 6 quantizes the orthogonal transformation coefficients outputted from the orthogonal transformation part 5 with reference to the quantizing matrix selected by the quantizing matrix selecting part 17. Therefore, the image encoding device in accordance with this Embodiment 4 can switch among the quantizing matrices by using the information which the image encoding device shares with the image decoding device, and, as a result, provides an advantage of being able to improve the image quality without lowering the encoding efficiency.

Furthermore, the image decoding device in accordance with this Embodiment 4 is constructed in such a way that the quantizing matrix selecting part 32 for selecting a quantizing matrix shown by the matrix information variable-length-decoded by the variable length decoding unit 21 from among the plurality of quantizing matrices which are prepared in advance is disposed, and an inverse quantizing part 24 inverse-quantizes the quantized values variable-length-decoded by the variable length decoding unit 31 with reference to the quantizing matrix selected by the quantizing matrix selecting part 32. Therefore, the image decoding device in accordance with this Embodiment 4 can switch among the quantizing matrices by using the information which the image decoding device shares with the image encoding device. As a result, the image decoding device provides an advantage of being able to select an appropriate quantizing matrix which is referred to by the inverse quantizing part 24 without any information about the quantizing matrix from the image encoding device.

Although in this Embodiment 4 a quantizing matrix is selected on the basis of the edge pattern acquired from the orthogonal transformation coefficients, as previously mentioned, this is only an example, and a quantizing matrix can be selected on the basis of the variance of the orthogonal transformation coefficients, for example.
Furthermore, although in this Embodiment 4 a quantizing matrix is selected from the feature of the orthogonal transformation coefficients, as previously mentioned, a combination of the feature and the average, the variance or the like of brightness values in the prediction image shown in above-mentioned Embodiment 1 can be used to select a quantizing matrix. In this case, although the amount of information to be processed increases, there is provided an advantage of being able to further improve the encoding efficiency.

Although in above-mentioned Embodiments 1 to 4 a quantizing matrix is selected from the brightness of the prediction image or the variance of brightness values in the case of an inter prediction mode, as previously mentioned, this is only an example, and a quantizing matrix can be selected by using the direction or size of a motion vector, for example.

### Industrial Applicability

Because the image encoding device, the image decoding device, the image encoding method, and the image decoding method in accordance with the present invention make it possible to switch among quantizing matrices by using a prediction image which is shared information, the image encoding device and the image encoding method are suitable for an image encoding device or the like for and an image encoding method or the like of variable-length-encoding an inputted image, respectively, and the image decoding device and the image decoding method are suitable for an image decoding device or the like for and an image decoding method or the like of variable-length-decoding an inputted image variable-length-encoded by the image encoding device, respectively.

## Claims

1. An image encoding device comprising:
a prediction image creating unit for detecting a motion vector from an inputted image to create a prediction image by using said motion vector;
a difference image calculating unit for calculating a difference image which is a difference between said inputted image and the prediction image created by said prediction image creating unit;
a quantizing matrix selecting unit for calculating an average and variance of brightness values in the prediction image created by said prediction image creating unit, and for selecting a quantizing matrix corresponding to said average and variance of the brightness values from among a plurality of quantizing matrices which are prepared in advance;
a quantizing unit for referring to the quantizing matrix selected by said quantizing matrix selecting unit to quantize the difference image calculated by said difference image calculating unit; and
an encoding unit for variable-length-encoding the difference image quantized by said quantizing unit and the motion vector detected by said prediction image creating unit.

2. An image encoding device comprising:
a prediction image creating unit for detecting a motion vector from an inputted image to create a prediction image by using said motion vector;
a difference image calculating unit for calculating a difference image which is a difference between said inputted image and the prediction image created by said prediction image creating unit;
an encoding mode determining unit for determining an encoding mode at a time of encoding the difference image calculated by said difference image calculating unit;
a quantizing matrix selecting unit for, when the encoding mode determined by said encoding mode determining unit is an intra prediction mode, selecting a quantizing matrix corresponding to an intra prediction direction in said intra prediction mode from among a plurality of quantizing matrices which are prepared in advance;
a quantizing unit for referring to the quantizing matrix selected by said quantizing matrix selecting unit to quantize the difference image calculated by said difference image calculating unit; and
an encoding unit for variable-length-encoding the difference image quantized by said quantizing unit, the motion vector detected by said prediction image creating unit, and the encoding mode determined by said encoding mode determining unit.

3. An image encoding device comprising:
a prediction image creating unit for detecting a motion vector from an inputted image to create a prediction image by using said motion vector;
a difference image calculating unit for calculating a difference image which is a difference between said inputted image and the prediction image created by said prediction image creating unit;
an encoding mode determining unit for determining an encoding mode at a time of encoding the difference image calculated by said difference image calculating unit;
a quantizing matrix selecting unit for, when the encoding mode determined by said encoding mode determining unit is an intra prediction mode, selecting a quantizing matrix corresponding to an intra prediction direction in said intra prediction mode from among a plurality of quantizing matrices which are prepared in advance, and for, when said encoding mode is an inter prediction mode, calculating an average and variance of brightness values in the prediction image created by said prediction image creating unit to select a quantizing matrix corresponding to said average and variance of brightness values from a plurality of quantizing matrices which are prepared in advance;
a quantizing unit for referring to the quantizing matrix selected by said quantizing matrix selecting unit to quantize the difference image calculated by said difference image calculating unit; and
an encoding unit for variable-length-encoding the difference image quantized by said quantizing unit, the motion vector detected by said prediction image creating unit, and the encoding mode determined by said encoding mode determining unit.

4. An image encoding device comprising:
a prediction image creating unit for detecting a motion vector from an inputted image to create a prediction image by using said motion vector;
a difference image calculating unit for calculating a difference image which is a difference between said inputted image and the prediction image created by said prediction image creating unit;
an orthogonal transformation unit for performing an orthogonal transformation on the difference image calculated by said difference image calculating unit to output orthogonal transformation coefficients of said difference image;
a quantizing matrix selecting unit for extracting an edge pattern from the orthogonal transformation coefficients outputted from said orthogonal transformation unit to select a quantizing matrix corresponding to said edge pattern from among a plurality of quantizing matrices which are prepared in advance;
a quantizing unit for referring to the quantizing matrix selected by said quantizing matrix selecting unit to quantize the orthogonal transformation coefficients outputted from said orthogonal transformation unit; and
an encoding unit for variable-length-encoding the orthogonal transformation coefficients quantized by said quantizing unit, the motion vector detected by said prediction image creating unit, and matrix information showing the quantizing matrix selected by said quantizing matrix selecting unit.

5. The image encoding device according to claim 1, wherein said image encoding device includes a scanning unit for, when an order of scanning quantization coefficients is defined for each of the quantizing matrices which are prepared in advance, scanning quantization coefficients in the quantizing matrix selected by the quantizing matrix selecting unit according to an order of scanning which is defined for said quantizing matrix to output the quantization coefficients to the encoding unit.

6. The image encoding device according to claim 2, wherein said image encoding device includes a scanning unit for, when an order of scanning quantization coefficients is defined for each of the quantizing matrices which are prepared in advance, scanning quantization coefficients in the quantizing matrix selected by the quantizing matrix selecting unit according to an order of scanning which is defined for said quantizing matrix to output the quantization coefficients to the encoding unit.

7. The image encoding device according to claim 3, wherein said image encoding device includes a scanning unit for, when an order of scanning quantization coefficients is defined for each of the quantizing matrices which are prepared in advance, scanning quantization coefficients in the quantizing matrix selected by the quantizing matrix selecting unit according to an order of scanning which is defined for said quantizing matrix to output the quantization coefficients to the encoding unit.

8. The image encoding device according to claim 4, wherein said image encoding device includes a scanning unit for, when an order of scanning quantization coefficients is defined for each of the quantizing matrices which are prepared in advance, scanning quantization,coefficients in the quantizing matrix selected by the quantizing matrix selecting unit according to an order of scanning which is defined for said quantizing matrix to output the quantization coefficients to the encoding unit.

9. An image decoding device comprising:
a decoding unit for variable-length-decoding a quantized difference image and a motion vector which are variable-length-encoded from a stream;
a prediction image creating unit for creating a prediction image by using the motion vector variable-length-decoded by said decoding unit;
a quantizing matrix selecting unit for calculating an average and variance of brightness values in the prediction image created by said prediction image creating unit to select a quantizing matrix corresponding to said average and variance of brightness values from among a plurality of quantizing matrices which are prepared in advance;
an inverse quantizing unit for referring to the quantizing matrix selected by said quantizing matrix selecting unit to inverse-quantize the quantized difference image variable-length-decoded by said decoding unit; and
an image adding unit for adding the difference image inverse-quantized by said inverse quantizing unit and the prediction image created by said prediction image creating unit.

10. An image decoding device comprising:
a decoding unit for variable-length-decoding a quantized difference image, a motion vector, and an encoding mode which are variable-length-encoded from a stream;
a prediction image creating unit for creating a prediction image by using the motion vector variable-length-decoded by said decoding unit;
a quantizing matrix selecting unit for, when the encoding mode variable-length-decoded by said decoding unit is an intra prediction mode, selecting a quantizing matrix corresponding to an intra prediction direction in said intra prediction mode from among a plurality of quantizing matrices which are prepared in advance;
an inverse quantizing unit for referring to the quantizing matrix selected by said quantizing matrix selecting unit to inverse-quantize the quantized difference image variable-length-decoded by said decoding unit; and
an image adding unit for adding the difference image inverse-quantized by said inverse quantizing unit and the prediction image created by said prediction image creating unit.

11. An image decoding device comprising:
a decoding unit for variable-length-decoding a quantized difference image, a motion vector, and an encoding mode which are variable-length-encoded from a stream;
a prediction image creating unit for creating a prediction image by using the motion vector variable-length-decoded by said decoding unit;
a quantizing matrix selecting unit for, when the encoding mode variable-length-decoded by said decoding unit is an intra prediction mode, selecting a quantizing matrix corresponding to an intra prediction direction in said intra prediction mode from among a plurality of quantizing matrices which are prepared in advance, and for, when said encoding mode is an inter prediction mode, calculating an average and variance of brightness values in the prediction image created by said prediction image creating unit to select a quantizing matrix corresponding to said average and variance of brightness values from a plurality of quantizing matrices which are prepared in advance;
an inverse quantizing unit for referring to the quantizing matrix selected by said quantizing matrix selecting unit to inverse-quantize the quantized difference image variable-length-decoded by said decoding unit; and
an image adding unit for adding the difference image inverse-quantized by said inverse quantizing unit and the prediction image created by said prediction image creating unit.

12. An image decoding device comprising:
a decoding unit for variable-length-decoding quantized orthogonal transformation coefficients, a motion vector, and matrix information showing a quantizing matrix which are variable-length-encoded from a stream;
a prediction image creating unit for creating a prediction image by using the motion vector variable-length-decoded by said decoding unit;
a quantizing matrix selecting unit for selecting a quantizing matrix shown by the matrix information variable-length-decoded by said decoding unit from among a plurality of quantizing matrices which are prepared in advance;
an inverse quantizing unit for referring to the quantizing matrix selected by said quantizing matrix selecting unit to inverse-quantize the quantized orthogonal transformation coefficients variable-length-decoded by said decoding unit, and for performing an inverse orthogonal transformation on the orthogonal transformation coefficients inverse-quantized thereby to output a difference image; and
an image adding unit for adding the difference image inverse-quantized by said inverse quantizing unit and the prediction image created by said prediction image creating unit.

13. The image decoding device according to claim 9, wherein said image decoding device includes an inverse scanning unit for, when an order of scanning quantization coefficients is defined for each of the quantizing matrices which are prepared in advance, scanning quantization coefficients in the quantizing matrix selected by the quantizing matrix selecting unit according to an order of scanning which is defined for said quantizing matrix to output the quantization coefficients to the inverse quantizing unit.

14. The image decoding device according to claim 10, wherein said image decoding device includes an inverse scanning unit for, when an order of scanning quantization coefficients is defined for each of the quantizing matrices which are prepared in advance, scanning quantization coefficients in the quantizing matrix selected by the quantizing matrix selecting unit according to an order of scanning which is defined for said quantizing matrix to output the quantization coefficients to the inverse quantizing unit.

15. The image decoding device according to claim 11, wherein said image decoding device includes an inverse scanning unit for, when an order of scanning quantization coefficients is defined for each of the quantizing matrices which are prepared in advance, scanning quantization coefficients in the quantizing matrix selected by the quantizing matrix selecting unit according to an order of scanning which is defined for said quantizing matrix to output the quantization coefficients to the inverse quantizing unit.

16. The image decoding device according to claim 12, wherein said image decoding device includes an inverse scanning unit for, when an order of scanning quantization coefficients is defined for each of the quantizing matrices which are prepared in advance, scanning quantization coefficients in the quantizing matrix selected by the quantizing matrix selecting unit according to an order of scanning which is defined for said quantizing matrix to output the quantization coefficients to the inverse quantizing unit.

17. An image encoding method comprising:
a prediction image creating processing step of a prediction image creating detecting a motion vector from an inputted image to create a prediction image by using said motion vector;
a difference image calculating processing step of a difference image calculating unit calculating a difference image which is a difference between said inputted image and the prediction image created by said prediction image creating unit;
a quantizing matrix selecting processing step of a quantizing matrix selecting unit calculating an average and variance of brightness values in the prediction image created by said prediction image creating unit, and for selecting a quantizing matrix corresponding to said average and variance of the brightness values from among a plurality of quantizing matrices which are prepared in advance;
a quantizing processing step of a quantizing unit referring to the quantizing matrix selected by said quantizing matrix selecting unit to quantize the difference image calculated by said difference image calculating unit; and
an encoding processing step of an encoding unit variable-length-encoding the difference image quantized by said quantizing unit and the motion vector detected by said prediction image creating unit.

18. An image decoding method comprising:
a decoding processing step of a decoding unit variable-length-decoding a quantized difference image and a motion vector which are variable-length-encoded from a stream;
a prediction image creating processing step of a prediction image creating unit creating a prediction image by using the motion vector variable-length-decoded by said decoding unit;
a quantizing matrix selecting processing step of a quantizing matrix selecting unit calculating an average and variance of brightness values in the prediction image created by said prediction image creating unit to select a quantizing matrix corresponding to said average and variance of brightness values from among a plurality of quantizing matrices which are prepared in advance; an inverse quantizing processing step of an inverse quantizing unit referring to the quantizing matrix selected by said quantizing matrix selecting unit to inverse-quantize the quantized difference image variable-length-decoded by said decoding unit; and
an image adding processing step of an image adding unit adding the difference image inverse-quantized by said inverse quantizing unit and the prediction image created by said prediction image creating unit.
